# EUROPÄISCHE PATENTANMELDUNG

(11) **EP 4 300 784 A1**
(43) Veröffentlichungstag der Anmeldung: **03.01.2024**
(21) Anmeldenummer: 22181702.6
(22) Anmeldetag: 28.06.2022
(51) Int. Cl.: H02K 3/50, H02K 5/22

(54) **STATORVORRICHTUNG FÜR EINE ELEKTRISCHE MASCHINE UND ELEKTRISCHER ANTRIEB FÜR EIN FAHRZEUG**

(71) Anmelder: Valeo eAutomotive Germany GmbH, 91056 Erlangen (DE)
(72) Erfinder: Lemmert, Kay, 97616 Bad Neustadt a.d.Saale (DE); Hellmuth, Stephan, 97616 Bad Neustadt a.d.Saale (DE); Finger-Albert, Christian, 97616 Bad Neustadt a.d.Saale (DE)
(74) Vertreter: Valeo Powertrain Systems

(57) **Zusammenfassung**

Statorvorrichtung (1) für eine elektrische Maschine (203), aufweisend:
- einen Stator (3), aufweisend einen Statorkern (4) mit einer Längsachse (6), einer ersten Stirnseite (7) und einer der ersten Stirnseite (7) axial bezüglich der Längsachse (6) gegenüberliegenden zweiten Stirnseite (8) sowie eine Statorwicklung (5), die an der ersten Stirnseite (7) einen Wicklungskopf (9) ausbildet und mehrere sich über den Wicklungskopf (9) hinaus erstreckende Anschlussabschnitte (10a-c, 11a-c) aufweist; und
- eine Anschlussvorrichtung (2), die einen Isolationskörper (13), der einen plattenförmige Basisabschnitt (14) mit einer dem Wicklungskopf (9) abgewandten ersten Seite (15) und einer dem Wicklungskopf (9) zugewandten zweiten Seite (16) aufweist und dazu eingerichtet ist, die Anschlussabschnitte (10a-c, 11a-c) mit einem elektrischen Leiter (205) zu verbinden;
wobei der Isolationskörper (13) mehrere Halteelemente (18a-c, 19a-c) aufweist, die an der zweiten Seite (16) vom Basisabschnitt (14) abstehen und dazu eingerichtet sind, den Isolationskörper (13) radial am Wicklungskopf (9) zu haltern.

## Beschreibung

Die vorliegende Erfindung betrifft eine Statorvorrichtung für eine elektrische Maschine und einen elektrischen Antrieb für ein Fahrzeug.

Um eine Statorwicklung eines Stators mit einer Spannungsquelle zur Bestromung der Statorwicklung zu verbinden, werden regelmäßig Anschlussvorrichtungen verwendet. Derartige Anschlussvorrichtungen können im Bereich eines Wicklungskopfs angeordnet sein.

Die US 2013/0147306 A1 offenbart beispielsweise einen Abstandshalter zum Abstützen von Leitern einer Statoranordnung einer elektrischen Maschine. Der Abstandshalter umfasst einen Isolationskörper aus einem elektrisch nichtleitenden Material. In dem Isolationskörper sind Phasenführungstaschen zum Aufnehmen von Phasenleitern ausgebildet. Am Ende eines jeweiligen Phasenleiters sind Ösen zum Anschließen der Phasenleiter angeordnet. Der Isolationskörper liegt axial auf dem Wicklungskopf auf.

Der Wicklungskopf kann jedoch durch unvermeidbare Fertigungstoleranzen unregelmäßig geformt sein, sodass eine exakte Positionierung der Anschlussvorrichtung auf dem Wicklungskopf erschwert wird. Dies ist insbesondere im Hinblick auf eine automatisierte Fertigung der Statorvorrichtung hinderlich.

Der Erfindung liegt die Aufgabe zugrunde, eine verbesserte, insbesondere eine automatisierte Fertigung erleichternde Möglichkeit zur Anordnung einer Anschlussvorrichtung im Bereich eines Wicklungskopfs eines Stators anzugeben.

Diese Aufgabe wird erfindungsgemäß gelöst durch eine Statorvorrichtung für eine elektrische Maschine, aufweisend: einen Stator, aufweisend einen Statorkern mit einer Längsachse, einer ersten Stirnseite und einer der ersten Stirnseite axial bezüglich der Längsachse gegenüberliegenden zweiten Stirnseite sowie eine Statorwicklung, die an der ersten Stirnseite einen Wicklungskopf ausbildet und mehrere sich über den Wicklungskopf hinaus erstreckende Anschlussabschnitte aufweist; und eine Anschlussvorrichtung, die einen Isolationskörper, der einen plattenförmige Basisabschnitt mit einer dem Wicklungskopf abgewandten ersten Seite und einer dem Wicklungskopf zugewandten zweite Seite aufweist und dazu eingerichtet ist, die Anschlussabschnitte mit einem elektrischen Leiter zu verbinden; wobei der Isolationskörper mehrere Halteelemente aufweist, die an der zweiten Seite vom Basisabschnitt abstehen und dazu eingerichtet sind, den Isolationskörper an einem Wicklungskopf des Stators zu haltern.

Die erfindungsgemäße Statorvorrichtung für eine elektrische Maschine weist einen Stator auf. Der Stator weist einen Statorkern auf. Der Statorkern weist eine Längsachse, einer ersten Stirnseite und eine zweite Stirnseite auf. Die zweite Stirnseite liegt der ersten Stirnseite axial bezüglich der Längsachse gegenüber. Der Stator weist ferner eine Statorwicklung auf. Die Statorwicklung bildet an der ersten Stirnseite einen Wicklungskopf aus. Die Statorwicklung weist mehrere sich über den Wicklungskopf hinaus erstreckende Anschlussabschnitte auf. Die erfindungsgemäße Statorvorrichtung weist ferner eine Anschlussvorrichtung auf. Die Anschlussvorrichtung weist einen Isolationskörper auf. Der Isolationskörper weist einen plattenförmigen Basisabschnitt auf. Der Basisabschnitt weist eine erste Seite auf. Die erste Seite ist dem Wicklungskopf abgewandt. Der Basisabschnitt weist ferner eine zweite Seite auf. Die zweite Seite ist dem Wicklungskopf zugewandt. Die Anschlussvorrichtung ist dazu eingerichtet, die Anschlussabschnitte mit einem elektrischen Leiter zu verbinden. Der Isolationskörper weist mehrere Halteelemente auf. Die Halteelemente stehen an der zweiten Seite vom Basisabschnitt ab. Die Halteelemente sind dazu eingerichtet, den Isolationskörper radial am Wicklungskopf zu haltern.

Die Erfindung beruht auf der Überlegung, die Position der Anschlussvorrichtung durch die Haltelemente am Wicklungskopf vorzugeben. Dadurch kann insbesondere ein radiales und/oder axiales Verrutschen der Anschlussvorrichtung während der Fertigung gehemmt werden. Außerdem ist eine radiale Halterung der Anschlussvorrichtung am Wicklungskopf weniger anfällig für Fertigungstoleranzen der Statorwicklung bzw. ihres Wicklungskopfs. Im Vergleich zu herkömmlichen Anschlussvorrichtung, die für eine direkte axiale Anordnung auf dem Wicklungskopf geformt sind, ist die erfindungsgemäße Statorvorrichtung robuster gegenüber Fertigungstoleranzen, was die automatisierte Fertigung der Statorvorrichtung erheblich erleichtert.

In bevorzugter Ausgestaltung ist der Isolationskörper aus einem Kunststoff gebildet. Der Basisabschnitt ist bevorzugt ringsektorförmig, sodass er sich um die Längsachse erstreckt.

Die Statorwicklung ist vorzugsweise aus einer Vielzahl von Formleitern ausgebildet, von denen einer den Anschlussabschnitt ausbildet. Die Formleiter sind vorzugsweise aus, insbesondere mehrfach, gebogenen Metallstäben gebildet. Eine solche Statorwicklung kann auch als Haarnadelwicklung (engl. hair pin winding) bezeichnet werden.

In bevorzugter Ausgestaltung der erfindungsgemäßen Statorvorrichtung umfassen die Halteelemente Halteelemente erster Art, die zumindest abschnittsweise derart elastisch verformbar sind, dass sie eine Rückstellkraft zum Haltern des Isolationskörpers auf den Wickelkopf ausüben. Dadurch kann die Anschlussvorrichtung einfach radial an den Wicklungskopf geklemmt werden.

Des Weiteren können die Haltelemente Halteelemente zweiter Art umfassen, die dazu eingerichtet sind, eine Gegenkraft der Rückstellkraft aufzunehmen. Bevorzugt sind die Halteelemente erster und zweiter Art dabei auf gegenüberliegenden radialen Seiten des Wicklungskopfs angeordnet. Bevorzugt ist vorgesehen, dass die Haltelemente erster Art radial innen am Wicklungskopf angeordnet sind und die Haltelemente zweiter Art radial außen am Wicklungskopf angeordnet sind. Es ist aber auch möglich, dass die Haltelemente die Haltelemente erster Art radial außen am Wicklungskopf angeordnet sind und die Haltelemente zweiter Art radial innen am Wicklungskopf angeordnet sind

Bevorzugt weisen die Halteelemente erster Art jeweils einen Rahmen und innerhalb des Rahmens ausgebildete elastisch verformbare Zungen auf. Die Zungen können am Rahmen gelagert sein und die Rückstellkraft auf den Wicklungskopf ausüben.

Bei der erfindungsgemäßen Statorvorrichtung ist bevorzugt ferner vorgesehen, dass an der zweiten Seite des Basisabschnitts mehrere Beine angeordnet sind, die auf dem Statorkern aufliegen und den Basisabschnitt beabstandet vom Stator positionieren. Dadurch wird di Anschlussvorrichtung bezüglich einer Axialrichtung am Stator positioniert.

Es kann bei der erfindungsgemäßen Statorvorrichtung auch vorgesehen sein, dass der Basisabschnitt mehrere Durchgangsöffnungen aufweist, durch welche die Anschlussabschnitte hindurchgeführt sind.

Daneben wird es bevorzugt, wenn die Anschlussvorrichtung einen Sternpunktleiter aufweist und der Isolationskörper Führungselemente aufweist, durch welche eine Bewegung des Sternpunktleiters entlang seiner Längsrichtung und/oder quer zu seiner Längsrichtung hemmbar ist. Der Sternpunktleiter kann mit weiteren Anschlussabschnitten der Statorwicklung elektrisch leitfähig und mechanisch verbunden sein. Außerdem kann der Basisabschnitt des Isolationskörpers weitere Durchgangsöffnungen aufweisen, durch welche die weiteren, mit dem Sternpunktleiter verbundenen Anschlussabschnitte durchgeführt sind.

In bevorzugter Weiterbildung weist die Anschlussvorrichtung ferner auf: einen elektrisch isolierenden zweiten Isolationskörper, der einen plattenförmige Basisabschnitt mit einer ersten Seite und einer der ersten Seite gegenüberliegenden und der ersten Seite des Basisabschnitts des ersten Isolationskörpers zugewandten zweite Seite sowie ein elektrisch leitfähiges Anschlusselement, das ein Befestigungsmittel zum elektrisch leitfähigen und mechanischen Verbinden mit dem elektrischen Leiter aufweist und auf der ersten Seite des zweiten Isolationskörpers angeordnet sind.

Der zweite Isolationskörper ist bevorzugt aus Kunststoff gebildet. Er kann ebenfalls ringsektorförmig um die Längsachse ausgebildet sein.

In Weiterbildung kann vorgesehen sein, dass das Anschlusselement zwei Schenkelabschnitte und einen die zwei Schenkelabschnitte zumindest abschnittsweise verbindenden Verbindungsabschnitt aufweist, wobei zwei Anschlussabschnitte der Statorwicklung elektrisch leitfähig und mechanisch mit jeweils einem der Schenkelabschnitte eines der Anschlusselemente verbunden sind, um eine elektrische leitfähige Verbindung der Anschlussabschnitte über das Anschlusselement mit dem elektrischen Leiter auszubilden. Die Schenkelabschnitte erstrecken sich vorzugsweise parallel zur Längsachse. Der Verbindungsabschnitt kann sich in einer senkrecht zur Längsachse stehenden Ebene von einem Schenkelabschnitt zum anderen Schenkelabschnitt erstrecken.

Der Basisabschnitt des zweiten Isolationskörpers kann ferner eine Ausnehmung aufweisen, in welcher die zwei Anschlussabschnitte angeordnet sind. Die Ausnehmung ist bevorzugt randseitig am Basisabschnitt ausgebildet. Die Ausnehmung ist vorzugsweise offen und/oder an einem radial von der Längsachse abgewandten Rand des Basisabschnitts des zweiten Isolationskörpers vorgesehen.

An einem jeweiligen Schenkelabschnitt kann ferner ein zur Ausnehmung weisender Vorsprung ausgebildet sein. Der Vorsprung kann radial, insbesondere von der Längsachse wegweisend, vom Schenkelabschnitt abstehen. Die Anschlussabschnitte sind bevorzugt elektrisch leitfähig und mechanisch, insbesondere durch Schweißen, an den Vorsprüngen befestigt.

Alternativ oder zusätzlich weist der Basisabschnitt des ersten Isolationskörpers Durchgangsöffnungen auf, durch welche die zwei Anschlussabschnitte vom Wicklungskopf zum Anschlusselement durchgeführt sind.

Das Anschlusselement ist bevorzugt eine mehrfach gebogene Stromschiene. Vorzugsweise weist das Abschlusselement ein U-Profil auf. Die Stromschiene entlang ihrer Erstreckungsrichtung von einem der Schenkelabschnitte über den Verbindungsabschnitt zum anderen der Schenkelabschnitte einen rechteckigen Querschnitt mit einer Schmalseite und einer Breitseite aufweisen. Der Vorsprung steht vorzugsweise von einer der Schmalseiten ab.

Es kann ferner vorgesehen sein, dass der Basisabschnitt des zweiten Isolationskörpers einen auf der ersten Seite angeordneten Positionierabschnitt aufweist und das Anschlusselement durch den Positionierabschnitt am zweiten Isolationskörper angeordnet ist. Dadurch kann die Position des Anschlusselements auf der ersten Seite des Basisabschnitts des zweiten Isolationskörpers durch den Positionierabschnitt sichergestellt werden. Die Vorsprünge des Anschlusselements können so präzise bezüglich der Ausnehmung angeordnet werden, um die Anschlussabschnitte der Statorwicklung durch die Ausnehmung an die Vorsprünge heranzuführen. Dadurch wird eine genaue Anordnung der Anschlussabschnitte bezüglich der Vorsprünge ermöglicht, was die automatisierte Fertigung der Statorvorrichtung weiter erleichtert.

Bevorzugt sind mehrere, insbesondere eine Anzahl der Phasen der Statorwicklung entsprechende Anzahl, von Positionierabschnitten und für jeden Positionierabschnitt ein Anschlusselement und eine Ausnehmung vorgesehen.

In bevorzugter Ausgestaltung der erfindungsgemäßen Anschlussvorrichtung weist das Befestigungsmittel ein Innengewinde auf. Dadurch lässt sich der elektrische Leiter mechanisch robust am Befestigungsmittel und damit am Anschlusselement befestigen.

Alternativ oder zusätzlich kann im Verbindungsabschnitt eine Durchgangsöffnung ausgebildet sein, in die das Befestigungsmittel eingepresst ist. In diesem Fall ist das Anschlusselement mehrteilig ausgebildet. Es ist aber auch möglich, dass das Befestigungsmittel einstückig mit dem Verbindungsabschnitt ausgebildet ist.

Das Befestigungsmittel kann als Buchse ausgebildet sein, die sich vom Verbindungsabschnitt in einen durch die Schenkelabschnitte begrenzten Zwischenraum erstreckt. Der Positionierabschnitt kann dann innerhalb des Zwischenraums mit der Buchse zur Positionierung des Anschlusselements wirkverbunden sein.

Bevorzugt weist der Positionierabschnitt ein auf der ersten Seite ausgebildetes Zentrierelement auf, dass zumindest abschnittsweise gegengleich zur Buchse ausgebildet ist. Vorzugsweise umgreift das Zentrierelement abschnittsweise die Buchse, um eine Relativposition des Anschlusselements bezüglich des zweiten Isolationskörpers bzw. dessen Basisabschnitts vorzugeben.

In bevorzugter Ausgestaltung ist ferner vorgesehen, dass der Positionierabschnitt ein sich von einem der Schenkelabschnitte zum anderen der Schenkelabschnitte erstreckendes Begrenzungselement aufweist, durch das eine Translationsbewegung des Anschlusselements parallel zum Basisabschnitt hemmbar ist. Das Begrenzungselement erstreckt sich bevorzugt zwischen den Schenkelabschnitten. Das Zentrierelement kann abschnittsweise als Einbuchtung des Begrenzungselements ausgebildet sein.

In bevorzugter Weiterbildung ist vorgesehen, dass der Positionierabschnitt für zumindest einen Schenkelabschnitt des durch ihn positionierten Anschlusselements wenigstens einen außerhalb der Schenkelabschnitte angeordneten Anschlag aufweist, durch den eine Rotation des Anschlusselements um eine senkrecht zum Basisabschnitt stehende Rotationsachse hemmbar ist und/oder durch den eine Translationsbewegung des Anschlusselements parallel zum Basisabschnitt des zweiten Isolationskörpers hemmbar ist. Besonders bevorzugt sind an der Außenseite eines jeweiligen Schenkelabschnitts jeweils zwei Anschläge vorgesehen.

Der Isolationskörper kann ferner Abschirmelemente aufweisen, die das Anschlusselement schenkelabschnittseitig zur Verlängerung von Luft- und Kriechstrecken umgeben. Die Abschirmelemente erstrecken sich bevorzugt weiter, insbesondere in axialer Richtung, von der ersten Seite weg als das Anschlusselement. In bevorzugter Ausgestaltung ist der wenigstens ein Anschlag an dem Abschirmelement angeordnet und/oder einstückig mit dem Abschirmelement ausgebildet. Der Anschlag kann senkrecht vom Abschirmelement abstehen.

Gemäß einer besonders bevorzugten Ausgestaltung ist vorgesehen, dass der Positionierabschnitt für jeden Schenkelabschnitt des durch ihn positionierten Anschlusselements ein Halteelement aufweist, durch welchen eine von der ersten Seite wegweisende Bewegung des Anschlusselements hemmbar ist. Insbesondere ist das Halteelement dazu eingerichtet, das Anschlusselement am Isolationskörper zu haltern. Das Halteelement kann zwischen den Schenkelabschnitten angeordnet sein.

In Weiterbildung kann vorgesehen sein, dass die Schenkelabschnitte jeweils eine Ausnehmung aufweisen und das Halteelement zum formschlüssigen Eingreifen in die Ausnehmung ausgebildet ist. Besonders bevorzugt wird durch die Ausnehmung und das Halteelemente eine Rastverbindung realisiert.

Außerdem kann vorgesehen sein, dass das Halteelement exzentrisch bezüglich des Schenkelabschnitts angeordnet ist, um ein Wechselwirken des Schenkelabschnitts mit dem Halteelement bei einer um 180° gedrehten Anordnung zu hemmen. Mit anderen Worten kann durch exzentrische Anordnung eine Verdrehsicherung bei einer Positionierung des Anschlusselements am zweiten Isolationskörper realisiert werden. Dadurch können vorteilhafterweise Fehlpositionierungen des Anschlusselements vermieden werden, da ein Werker ein fehlerhaftes, d. h. um 180° verdreht, Anordnen wegen der Inkompatibilität von Halteelement und Anordnungen dieser Position unmittelbar bemerkt.

Außerdem kann der erste Isolationskörper mehrere Befestigungsabschnitte aufweisen, die in zum ersten Isolationskörper weisende Richtung vom Basisabschnitt des ersten Isolationskörpers abstehen und dazu eingerichtet sind, den zweiten Isolationskörper am ersten Isolationskörper zu befestigen. Dabei kann zumindest ein Teil der Befestigungsabschnitte als Rastelement ausgebildet sein, das eine Durchgangsöffnung des Basisabschnitts des zweiten Isolationskörpers durchsetzt und zum Befestigen den Basisabschnitt des zweiten Isolationskörpers auf dessen erster Seite hintergreift. Alternativ oder zusätzlich ist vorgesehen, dass zumindest ein Teil der Befestigungsabschnitte mit einem den Basisabschnitt des zweiten Isolationskörpers durchsetzenden Befestigungsmittel, insbesondere eine Schraube, in Eingriff ist.

Die der Erfindung zugrunde liegende Aufgabe wird ferner gelöst durch einen elektrischen Antrieb für ein Fahrzeug, aufweisend: eine erfindungsgemäße Statorvorrichtung, einen drehbar bezüglich der Statorvorrichtung gelagerten Rotor, sodass die Statorvorrichtung und der Rotor eine elektrische Maschine ausbilden, einen Stromrichter zur elektrischen Versorgung der Statorwicklung und den elektrischen Leiter, über welchen der Stromrichter mit dem Anschlussabschnitt elektrisch leitfähig verbunden ist.

Weitere Vorteile und Einzelheiten der vorliegenden Erfindung ergeben sich aus den im folgenden beschriebenen Ausführungsbeispielen sowie anhand der Zeichnungen. Diese sind schematische Darstellungen und zeigen:
- Fig. 1: eine perspektivische Ansicht eines Ausführungsbeispiels der erfindungsgemäßen Statorvorrichtung;
- Fig. 2: eine perspektivische Ansicht des ersten Isolationskörpers;
- Fig. 3 u. 4: jeweils eine perspektivische Detailansicht des Stators und des ersten Isolationskörpers;
- Fig. 5: eine geschnittene Ansicht des Stators und des ersten Isolationskörpers;
- Fig. 6 u. 7: jeweils eine perspektivische Ansicht der Anschlussvorrichtung;
- Fig. 8: eine perspektivische Ansicht eines Anschlusselements;
- Fig. 9: eine Draufsicht auf den zweiten Isolationskörper;
- Fig. 10: eine perspektivische Detailansicht des zweiten Isolationskörpers;
- Fig. 11: eine perspektivische Detailansicht des zweiten Isolationskörpers mit dem angeordneten Anschlusselement; und
- Fig. 12: eine Prinzipskizze eines Fahrzeugs mit einem Ausführungsbeispiel des erfindungsgemäßen elektrischen Antriebs.

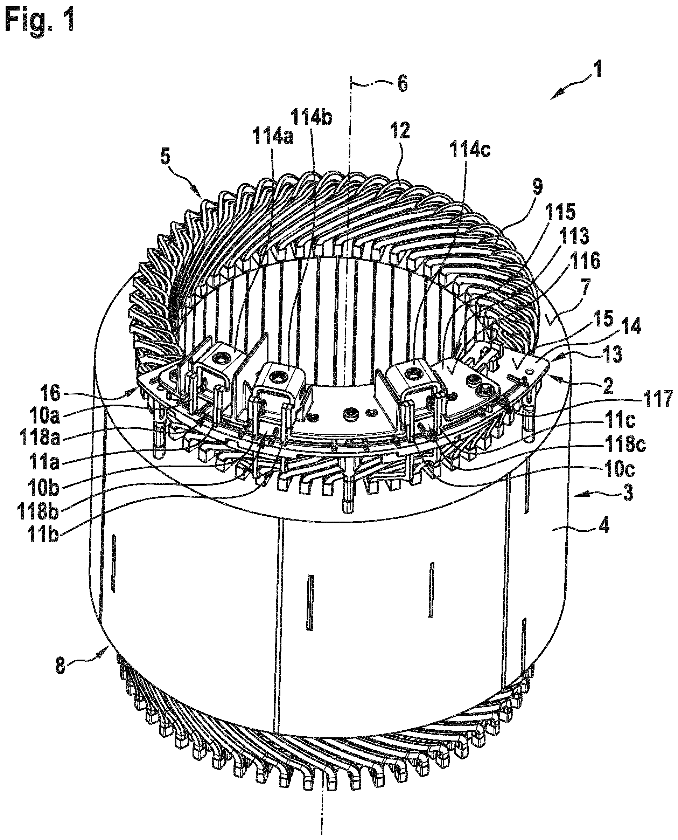

Fig. 1 ist eine perspektivische Ansicht eines Ausführungsbeispiels einer Statorvorrichtung 1 mit einer Anschlussvorrichtung 2.

Die Statorvorrichtung 1 weist neben der Anschlussvorrichtung 2 einen Stator 3 mit einem Statorkern 4 und einer Statorwicklung 5 auf.

Der Statorkern 4 weist eine Längsachse 6, eine erste Stirnseite 7 und eine der ersten Stirnseite 7 gegenüberliegende zweite Stirnseite 8 auf. Der Statorkern 4 ist exemplarisch aus einer Vielzahl axial geschichtet angeordneter und gegeneinander isolierter Einzelbleche (nicht gezeigt) gebildet und kann daher auch als Statorblechpaket bezeichnet werden.

Die Statorwicklung 5 bildet an der ersten Stirnseite 7 einen Wicklungskopf 9 aus und weist an der ersten Stirnseite 7 mehrere Anschlussabschnitte 10a, 10b, 10c, 11a, 11b, 11c auf. Im vorliegenden Ausführungsbeispiel ist die Statorwicklung 5 aus einer Vielzahl von Formleitern 12 ausgebildet, die sich jeweils axial durch den Statorkern 4 erstrecken und an der zweiten Stirnseite 8 elektrisch leitfähig und mechanisch miteinander verbunden, beispielsweise verschweißt, sind. Die Statorwicklung 5 kann daher auch als Haarnadelwicklung (engl. hair pin winding) erachtet werden.

Die Anschlussvorrichtung 2 weist außerdem einen ersten Isolationskörper 13 auf. Der erste Isolationskörper 13 weist einen plattenförmigen Basisabschnitt 14 mit einer dem Wicklungskopf 9 abgewandten ersten Seite 15 und einer dem Wicklungskopf 9 zugewandten zweiten Seite 16 auf. Der Basisabschnitt 14 ist ringsektorförmig ausgebildet und erstreckt sich um die Längsachse 6.

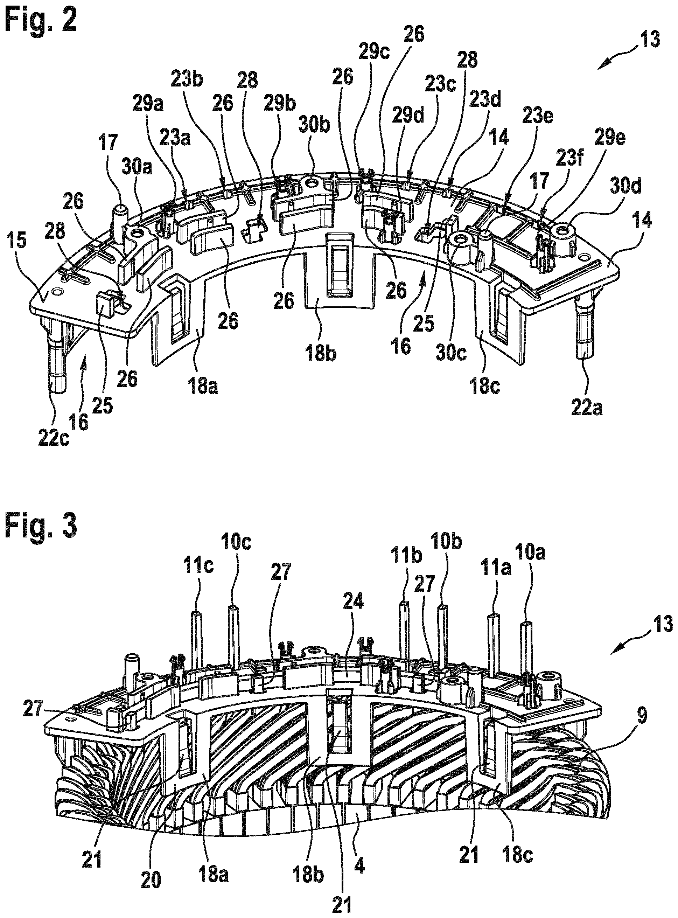

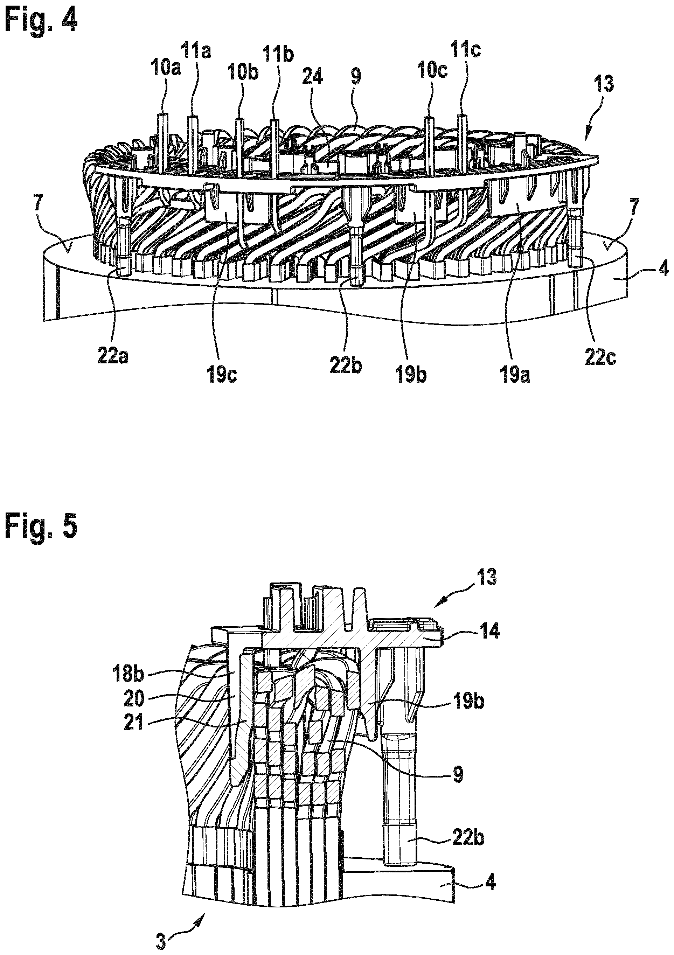

Fig. 2 bis Fig. 5 zeigen jeweils den ersten Isolationskörper 13, wobei Fig. 2 eine perspektivische Ansicht des ersten Isolationskörpers 13 ist, Fig. 3 und Fig. 4 jeweils eine perspektivische Ansicht des Stators 3 und des ersten Isolationskörpers 13 sind und Fig. 5 eine geschnittene des Stators 3 und des ersten Isolationskörpers 13 ist.

Der erste Isolationskörper 13 weist mehrere Halteelemente 18a, 18b, 18c, 19a, 19b, 19c auf, die dazu eingerichtet sind, den ersten Isolationskörper 13 am Wicklungskopf 9 zu haltern. Die Halteelemente 18a-c, 19a-c sind dabei an der zweiten Seite 16 des Basisabschnitts 14 angeordnet und stehen in zum Statorkern 4 weisende Richtung vom Basisabschnitt 14 ab.

Die Halteelemente 18a-c, 19a-c umfassen Halteelemente erster Art 18a-c und Halteelemente 19a-c zweiter Art. Die Haltelemente erster Art 18a-c sind abschnittsweise derart elastisch verformbar, dass sie eine Rückstellkraft zum Haltern des ersten Isolationskörpers 13 ausüben. Die Halteelemente zweiter Art 19a-c sind dazu eingerichtet eine Gegenkraft der Rückstellkraft aufzunehmen.

Dazu sind die Halteelemente erster Art 18a-c und die Halteelemente zweiter Art 19a-c auf gegenüberliegenden radialen Seiten des Wicklungskopfs 9 angeordnet. Im vorliegenden Ausführungsbeispiel sind die Halteelemente erster Art 18a-c radial innen am Wicklungskopf 9 und die Halteelemente zweiter Art 19a-c radial außen am Wicklungskopf 9 angeordnet. Alternativ können aber auch die Halteelemente erster Art 18a-c radial außen am Wicklungskopf 9 und die Halteelemente zweiter Art 19a-c radial innen am Wicklungskopf 9 angeordnet sein.

Im Detail weisen die Halteelemente erster Art 18a-c jeweils einen Rahmen 20 und eine innerhalb des Rahmens ausgebildete elastisch verformbare Zunge 21 auf. Die Zungen 21 sind an den Rahmen 20 gelagert und üben die Rückstellkraft auf den Wicklungskopf 9 aus.

Der erste Isolationskörper 13 weist ferner drei Beine 22a, 22b, 22c auf. Die Beine 22a-c sind auf der zweiten Seite 16 ausgebildet und liegen auf der ersten Stirnseite 7 des Statorkerns 4 auf. Dadurch beabstanden die Beine 22a-c den Basisabschnitt 14 von der ersten Stirnseite 7.

Des Weiteren weist der Basisabschnitt 14 für jeden Anschlussabschnitt 10a-c, 11a-c eine Durchgangsöffnung 23a, 23b, 23c, 23d, 23e, 23f (siehe Fig. 2) auf. Dabei durchsetzt jeder der Anschlussabschnitte 10a-c, 11a-c eine der Durchgangsöffnungen 23a-f.

Wie in Fig. 2 und Fig. 3 am besten zu erkennen ist, weist die Anschlussvorrichtung 2 fernen einen als Stromschiene ausgebildeten Sternpunktleiter 24 auf. Der Sternpunktleiter 24 ist in mehreren Führungselementen 25, 26, die von der ersten Seite 15 des Basisabschnitts 14 des ersten Isolationskörpers 13 abstehen angeordnet. Dabei ist durch die Führungselemente 25 eine Bewegung des Sternpunktleiters 24 entlang seiner Längsrichtung bzw. in Umfangsrichtung bezüglich der Längsachse 6 hemmbar und durch die Führungselemente 26 eine Bewegung des Sternpunktleiters 24 quer zu seiner Längsrichtung bzw. in Radialrichtung bezüglich der Längsachse 6 hemmbar. Der Sternpunktleiter 24 ist mit weiteren Anschlussabschnitten 27 der Statorwicklung 5 elektrisch leitfähig und mechanisch verbunden. Für jeden weiteren Anschlussabschnitt 27 ist eine weitere Durchgangsöffnung 28 (siehe Fig. 2) im Basisabschnitt des ersten Isolationskörpers 13 ausgebildet.

Wieder mit Bezug zu Fig. 1 weist die Anschlussvorrichtung 2 ferner einen elektrisch isolierenden zweiten Isolationskörper 113 und drei elektrisch leitfähige Anschlusselemente 114a, 114b, 114c auf. Der zweite Isolationskörper 113 weist einen plattenförmigen Basisabschnitt 115 mit einer ersten Seite 116 sowie einer der ersten Seite gegenüberliegenden zweiten Seite 117 auf. Die zweite Seite 117 ist der ersten Stirnseite 7 des Statorkerns 4 und dem Wicklungskopf 9 zugewandt.

Für jedes Anschlusselement 114a-c weist der Basisabschnitt 115 eine Ausnehmung 118a, 118b, 118cauf. In den Ausnehmungen 118a-csind jeweils zwei der Anschlussabschnitte 10a-c, 11a-c anordenbar. Die zwei Anschlussabschnitte 10a-c, 11a-c sind mechanisch und elektrisch leitfähig, beispielsweise durch Schweißen, mit einem der Anschlusselemente 114a-c verbunden. Dabei sind die zwei durch eines der Anschlusselemente 114a-c verbundenen Anschlussabschnitte 10a-c, 11a-c jeweils einer Phase der Statorwicklung 5 zugeordnet. Im vorliegenden Ausführungsbeispiel ist der Basisabschnitt 14 exemplarisch ringsektorförmig ausgebildet und erstreckt sich um die Längsachse 6. Ersichtlich durchsetzt jeder der Anschlussabschnitte 10a-c, 11a-c eine der Durchgangsöffnungen 23a-f des ersten Isolationskörpers 13, sodass jeweils ein Paar der Anschlussabschnitte 10a-c, 11a-c in die Ausnehmungen 118a-c des Basisabschnitts 115 des zweiten Isolationskörpers 113 geführt ist.

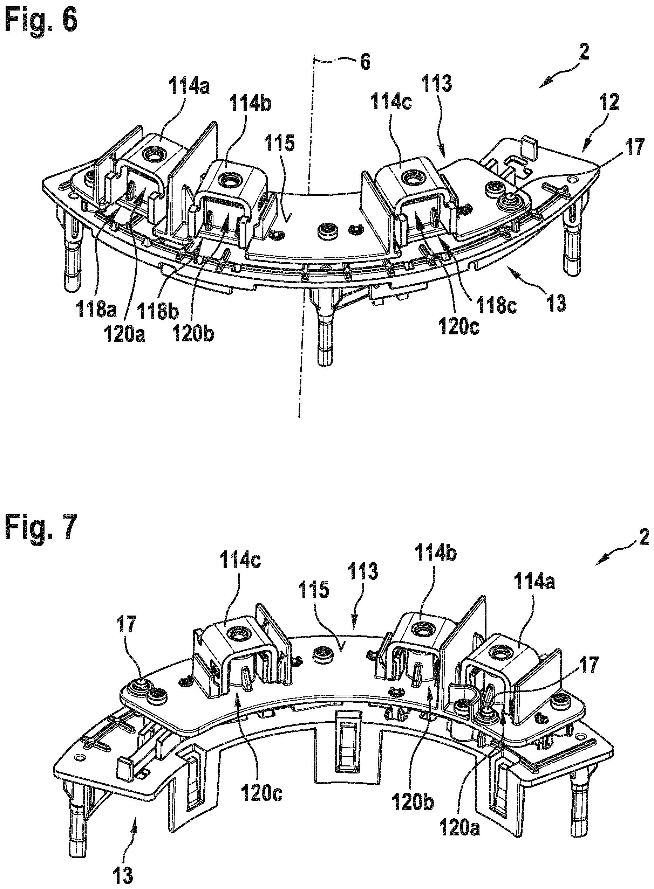

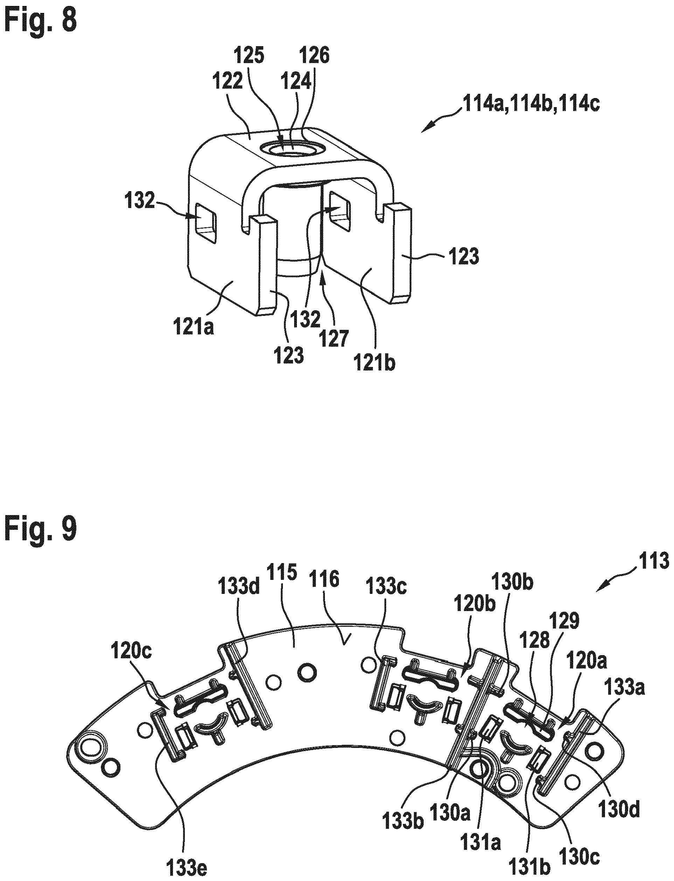

Fig. 6 und Fig. 7 sind jeweils ist eine perspektivische Ansicht der Anschlussvorrichtung 2. Fig. 8 ist eine perspektivische Ansicht eines Anschlusselements 114a-c.

Auf der ersten Seite 116 weist der zweite Isolationskörper 113 für jedes Anschlusselement 114a-c einen Positionierabschnitt 120a, 120b, 120c auf, durch welches das Anschlusselement 114a-c am zweiten Isolationskörper 113 angeordnet ist. Die Anschlusselemente 114a-c weisen jeweils zwei Schenkelabschnitte 121a, 121b auf, die sich von ersten Seite 116 weg erstrecken. Im vorliegenden Fall des ringsektorförmigen Basisabschnitts 115 erstrecken sich die Schenkelabschnitte 121a, 121b folglich in axiale Richtung bezüglich der Längsachse 6. Daneben weist jedes Anschlusselement 114a-c einen Verbindungsabschnitt 122 auf, der die Schenkelabschnitte 121a, 121b an ihrem der ersten Seite 116 abgewandten Ende verbindet.

Jeder Schenkelabschnitt 121a, 121b weist einen zur Ausnehmung 118a-c weisenden Vorsprung 123 auf. Bezogen auf die Längsachse 6 erstrecken sich die Vorsprünge 123 radial nach außen. Wie in einer Zusammenschau mit Fig. 1 zu sehen ist, können die Anschlussabschnitte 10a-c, 11a-c paarweise an den Innenseiten der Vorsprünge 123 angeschweißt werden, um die elektrisch leitfähige und mechanische Verbindung auszubilden.

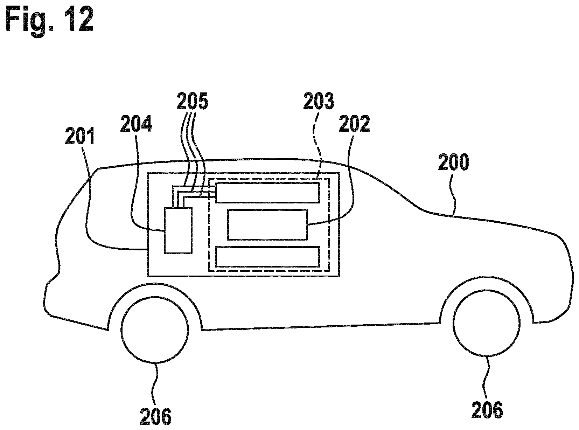

Zusätzlich weist jedes Anschlusselement 114a-c ein Befestigungsmittel 124 zum elektrisch leitfähigen und mechanischen Verbinden des Verbindungsabschnitts 122 mit einem elektrischen Leiter 205 (siehe Fig. 12) auf. Das Befestigungsmittel 124 ist als Buchse ausgebildet und weist ein Innengewinde 125 auf. Das Befestigungsmittel 124 ist in eine Durchgangsöffnung 126 des Verbindungsabschnitts 122 eingepresst. Die Buchse erstreckt sich, insbesondere axial, in einen durch die Schenkelabschnitte 121a, 121b begrenzten Zwischenraum 127.

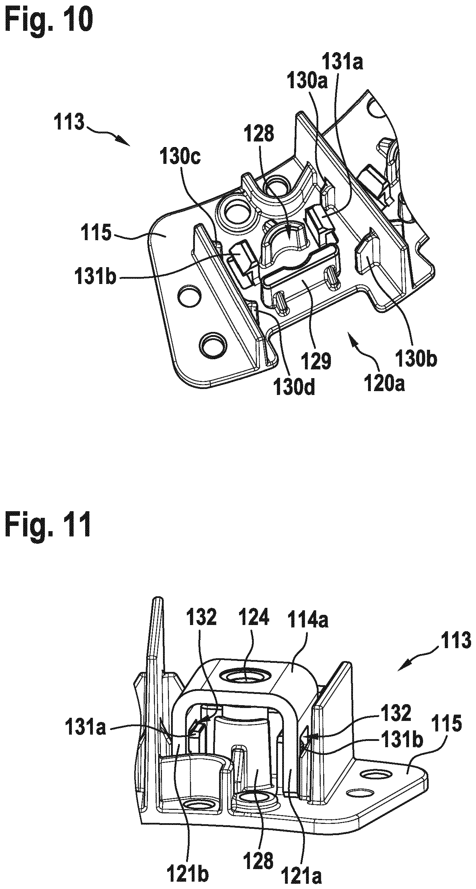

Fig. 9 und Fig. 10 zeigen den zweiten Isolationskörper 113, wobei Fig. 9 eine Draufsicht auf dessen erste Seite 116 ist und Fig. 10 eine perspektivische Detailansicht des Positionierabschnitts 120a ist. Fig. 11 ist eine perspektivische Detailansicht des zweiten Isolationskörpers 113 mit dem angeordneten Anschlusselement 114a. Im Folgenden wird anhand des Positionierabschnitts 120a und des Anschlusselements 114a repräsentativ für die weiteren Positionierabschnitte 120b, 120c und Anschlusselemente 114b, 114c die Anordnung der Anschlusselemente 114a-c am ersten Isolationskörper 113 erläutert.

Der Positionierabschnitt 120a weist zunächst ein auf der ersten Seite 116 ausgebildetes Zentrierelement 128 auf. Das Zentrierelement 128 ist zweigeteilt und abschnittsweise gegengleich zur als Buchse ausgebildeten Befestigungsmittel 124 geformt. Zur Zentrierung des Anschlusselements 114a ist das Befestigungsmittel1 124 in das Zentrierelement 128 eingeführt.

Zur Hemmung einer Translationsbewegung des Anschlusselements 114a weist der Positionierabschnitt 120a für jeden Schenkelabschnitt ein sich von Schenkelabschnitt 121a zu Schenkelabschnitt 121b erstreckendes Begrenzungselement 129 sowie außerhalb der Schenkelabschnitte 121a, 121b angeordnete Anschläge 130a, 130b, 130c, 130d auf. Dabei sind hier exemplarisch an jeder Außenseite eines der Schenkelabschnitte 121a, 121b zwei Anschläge 130a-d vorgesehen. Durch die Anschläge 130a-d ist ferner eine Rotationsbewegung des Anschlusselements 114a um eine senkrecht zum Basisabschnitt 115 stehende Rotationsachse hemmbar. Im vorliegenden Ausführungsbeispiel ist das Zentrierelement 128 teilweise einstückig mit Begrenzungselement 129 ausgebildet.

Außerdem weist der Positionierabschnitt 120a für jeden Schenkelabschnitt 121a, 121b ein Haltelement 131a, 131b auf, das vorliegend als Rastelement ausgebildet ist. Durch die Haltelemente 131a, 131b ist eine von der ersten Seite 116 wegweisende bzw. in axiale Richtung bezüglich der Längsachse 6 weisende Bewegung des Anschlusselements 114a hemmbar. Dazu weist jeder Schenkelabschnitt 121a, 121b eine Ausnehmung 132 (siehe auch Fig. 8) auf, in welche das Halteelement 131a, 131b formschlüssig eingreift. Als zusätzliche Sicherung gegen ein um 180° verdrehtes Einsetzen des Anschlusselements 114a in den Positionierabschnitt 120a sind die Halteelemente 131a, 131b exzentrisch bezüglich des entsprechenden Schenkelabschnitts 121a, 121b angeordnet.

Zur Verlängerung von Luft- und Kriechstrecken zwischen den Anschlusselementen 114a-c und/oder weiteren elektrische leitfähigen Komponenten in der Umgebung des Anschlusselements 114a-c weist der zweite Isolationskörper 113 ferner Abschirmelemente 133a, 133b, 133c, 133d, 133e auf, die das jeweilige Anschlusselement 114a-c schenkelabschnittseitig umgeben. Dabei sind die Anschläge 130a-d einstückig mit den Abschirmelementen 133a-e ausgebildet.

Wieder mit Bezug zu Fig. 2 und Fig. 7 der erste Isolationskörper 13 weist zunächst zwei Abstandshalter 17 auf, die den ersten Isolationskörper 13 vom zweiten Isolationskörper 113 beabstanden. Wie in Fig. 2 ferner zu erkennen ist, weist der erste Isolationskörper 13 ferner mehrere Befestigungsabschnitte 29a, 29b, 29c, 29d, 29e, 30a, 30b, 30c, 30d auf, die in zum zweiten Isolationskörper 113 weisende Richtung vom Basisabschnitt 14 abstehen und dazu eingerichtet sind, den zweiten Isolationskörper 113 am ersten Isolationskörper 13 zu befestigen. Dabei sind die Befestigungsabschnitte 29a-e als Rastelemente ausgebildet ist, die eine Durchgangsöffnung des Basisabschnitts 115 des zweiten Isolationskörpers 114 durchsetzen und zum Befestigen auf der ersten Seite 116 den Basisabschnitts 115 des zweiten Isolationskörpers 113 hintergreifen. Die Befestigungsabschnitte 30a-d sind hingegen jeweils mit einem den Basisabschnitt 115 des zweiten Isolationskörpers 113 durchsetzenden Befestigungsmittel 31, hier beispielsweise einer Schraube, in Eingriff.

Fig. 12 ist eine Prinzipskizze eines Fahrzeugs 200 mit einem Ausführungsbeispiel eines elektrischen Antriebs 201.

Der elektrische Antrieb 201 weist eine aus der Statorvorrichtung 1 und einem Rotor 202, der drehbar bezüglich der Statorvorrichtung 1 gelagert ist, gebildete elektrische Maschine 203 auf. Die elektrische Maschine 203 ist beispielsweise ein permanent oder elektrisch erregter Synchronmotor oder ein Asynchronmotor.

Daneben weist der elektrische Antrieb 201 einen Stromrichter 204 in Gestalt eines Wechselrichters auf, der zur elektrischen Versorgung der Statorwicklung 5 (siehe Fig. 1) eingerichtet ist. Der Stromrichter 204 ist über elektrische Leiter 205, beispielsweise jeweils in Gestalt einer Stromschiene, mit der Statorwicklung verbunden. Dabei ist jeder elektrische Leiter 205 an einem der Befestigungsmittel 24 eines der Anschlusselemente 114a-c (siehe Fig. 8) elektrisch leitfähig befestigt, sodass die elektrisch leitfähige Verbindung der Anschlussabschnitte 10a-c, 11a-c über die Anschlusselemente 114a-c mit den elektrischen Leitern 205 ausgebildet ist.

Das Fahrzeug 200 weist ferner Räder 206 auf. Die elektrische Maschine 202 ist dazu eingerichtet ist, wenigstens eines der Räder 206 indirekt, beispielsweise über ein Getriebe (nicht gezeigt) anzutreiben oder direkt, beispielsweise in Gestalt eines Radnabenmotors, anzutreiben. Das Fahrzeug 200 kann ferner eine mit dem Rad 206 gekoppelte Achse (nicht gezeigt) aufweisen, die die elektrische Maschine 203 des Fahrzeugs 200 direkt oder indirekt antreibt.

Das Fahrzeug 200 ist ein batterieelektrisches Fahrzeug (BEV), ein mittels einer Brennstoffzelle betriebenes Fahrzeug oder ein Hybridfahrzeug. Im letzteren Fall weist das Fahrzeug 200 ferner einen Verbrennungsmotor (nicht gezeigt) auf.

## Patentansprüche

1. Statorvorrichtung (1) für eine elektrische Maschine (203), aufweisend:
- einen Stator (3), aufweisend einen Statorkern (4) mit einer Längsachse (6), einer ersten Stirnseite (7) und einer der ersten Stirnseite (7) axial bezüglich der Längsachse (6) gegenüberliegenden zweiten Stirnseite (8) sowie eine Statorwicklung (5), die an der ersten Stirnseite (7) einen Wicklungskopf (9) ausbildet und mehrere sich über den Wicklungskopf (9) hinaus erstreckende Anschlussabschnitte (10a-c, 11a-c) aufweist; und
- eine Anschlussvorrichtung (2), die einen Isolationskörper (13), der einen plattenförmige Basisabschnitt (14) mit einer dem Wicklungskopf (9) abgewandten ersten Seite (15) und einer dem Wicklungskopf (9) zugewandten zweiten Seite (16) aufweist und dazu eingerichtet ist, die Anschlussabschnitte (10a-c, 11a-c) mit einem elektrischen Leiter (205) zu verbinden;
wobei der Isolationskörper (13) mehrere Halteelemente (18a-c, 19a-c) aufweist, die an der zweiten Seite (16) vom Basisabschnitt (14) abstehen und dazu eingerichtet sind, den Isolationskörper (13) radial am Wicklungskopf (9) zu haltern.

2. Statorvorrichtung nach Anspruch 1, wobei
die Halteelemente (18a-c, 19a-c) Halteelemente erster Art (18a-c) umfassen, die zumindest abschnittsweise derart elastisch verformbar sind, dass sie eine Rückstellkraft zum Haltern des Isolationskörpers (13) auf den Wickelkopf (9) ausüben.

3. Statorvorrichtung nach Anspruch 2, wobei
die Haltelemente (18a-c, 19a-c) Halteelemente zweiter Art (19a-c) umfassen, die dazu eingerichtet sind, eine Gegenkraft der Rückstellkraft aufzunehmen.

4. Statorvorrichtung nach Anspruch 3, wobei
die Halteelemente erster und zweiter Art (18a-c, 19a-c) auf gegenüberliegenden radialen Seiten des Wicklungskopfs (9) angeordnet sind.

5. Statorvorrichtung nach einem der Ansprüche 2 bis 4, wobei die Halteelemente erster Art (18a-c9 jeweils einen Rahmen (20) und innerhalb des Rahmens (20) ausgebildete elastisch verformbare Zungen (21) aufweisen, die am Rahmen (20) gelagert sind und die Rückstellkraft auf den Wicklungskopf (9) ausüben.

6. Statorvorrichtung nach einem der vorhergehenden Ansprüche, wobei an der zweiten Seite (16) des Basisabschnitts (14) mehrere Beine (22a-c) angeordnet sind, die auf dem Statorkern (4) aufliegen und den Basisabschnitt (14) beabstandet vom Stator (3) positionieren.

7. Statorvorrichtung nach einem der vorhergehenden Ansprüche, wobei der Basisabschnitt (14) mehrere Durchgangsöffnungen (23a-f) aufweist, durch welche die Anschlussabschnitte (10a-c, 11a-c) hindurchgeführt sind.

8. Statorvorrichtung nach einem der vorhergehenden Ansprüche, wobei die Anschlussvorrichtung (2) einen Sternpunktleiter (24) aufweist und der Isolationskörper (13) Führungselemente (25, 26) aufweist, durch welche eine Bewegung des Sternpunktleiters (24) entlang seiner Längsrichtung und/oder quer zu seiner Längsrichtung hemmbar ist.

9. Statorvorrichtung nach einem der vorhergehenden Ansprüche, wobei die Anschlussvorrichtung (2) ferner aufweist:
- einen elektrisch isolierenden zweiten Isolationskörper (113), der einen plattenförmige Basisabschnitt (115) mit einer ersten Seite (116) und einer der ersten Seite (116) gegenüberliegenden und der ersten Seite (15) des Basisabschnitts (14) des ersten Isolationskörpers (13) zugewandten zweite Seite (117) sowie
- ein elektrisch leitfähiges Anschlusselement (114a-c), das ein Befestigungsmittel (124) zum elektrisch leitfähigen und mechanischen Verbinden mit dem elektrischen Leiter (205) aufweist und auf der ersten Seite (116) des zweiten Isolationskörpers (113) angeordnet sind.

10. Statorvorrichtung nach Anspruch 9, wobei
das Anschlusselement (114a-c) zwei Schenkelabschnitte (121a, 121b) und einen die zwei Schenkelabschnitte (121a, 121b) zumindest abschnittsweise verbindenden Verbindungsabschnitt (122) aufweist, wobei zwei Anschlussabschnitte (10a-c, 11a-c) der Statorwicklung (5) elektrisch leitfähig und mechanisch mit jeweils einem der Schenkelabschnitte (121a, 121b) eines der Anschlusselemente (114a-c) verbunden sind, um eine elektrische leitfähige Verbindung der Anschlussabschnitte (10a-c, 11a-c) über das Anschlusselement (114a-c) mit dem elektrischen Leiter (205) auszubilden.

11. Statorvorrichtung nach Anspruch 10, wobei
der Basisabschnitt (115) des zweiten Isolationskörpers (113) eine Ausnehmung (118a-c) aufweist, in welcher die zwei Anschlussabschnitte (10a-c, 11a-c) angeordnet sind.

12. Statorvorrichtung nach einem der Ansprüche 9 bis 11, wobei der erste Isolationskörper (13) mehrere Befestigungsabschnitte (29a-e, 30a-d) aufweist, die in zum ersten Isolationskörper (113) weisende Richtung vom Basisabschnitt (14) des ersten Isolationskörpers (13) abstehen und dazu eingerichtet sind, den zweiten Isolationskörper (113) am ersten Isolationskörper (13) zu befestigen.

13. Statorvorrichtung nach Anspruch 12, wobei
- zumindest ein Teil der Befestigungsabschnitte (29a-e) als Rastelement ausgebildet ist, das eine Durchgangsöffnung des Basisabschnitts (115) des zweiten Isolationskörpers (113) durchsetzt und zum Befestigen des Basisabschnitts (115) des zweiten Isolationskörpers (113) auf dessen erster Seite (116) hintergreift und/oder
- zumindest ein Teil der Befestigungsabschnitte (30a-d) mit einem den Basisabschnitt (115) des zweiten Isolationskörpers (113) durchsetzenden Befestigungsmittel (31), insbesondere eine Schraube, in Eingriff ist.

14. Elektrischer Antrieb (201) für ein Fahrzeug (200), aufweisend:
- eine Statorvorrichtung (1) nach einem der vorhergehenden Ansprüche,
- einen drehbar bezüglich der Statorvorrichtung (1) gelagerten Rotor (202), sodass die Statorvorrichtung (1) und der Rotor (202) eine elektrische Maschine (203) ausbilden,
- einen Stromrichter (204) zur elektrischen Versorgung der Statorwicklung (5) und
- den elektrischen Leiter (205), über welchen der Stromrichter (204) mit dem Anschlussabschnitt (10a-c, 11a-c) elektrisch leitfähig verbunden ist.
